# EUROPEAN PATENT SPECIFICATION

(11) **EP 3 388 289 B1**
(45) Date of publication and mention of the grant of the patent: **04.09.2019**
(21) Application number: 17165736.4
(22) Date of filing: 10.04.2017
(51) Int. Cl.: B60R 21/06

(54) **ADJUSTABLE CARGO NET MECHANISM**
VERSTELLBARER LADENETZMECHANISMUS
MÉCANISME DE FILET DE CARGAISON RÉGLABLE

(43) Date of publication of application: 17.10.2018
(73) Proprietor: Ford Otomotiv Sanayi Anonim Sirketi, 34885 Istanbul (TR)
(72) Inventor: Türker, EMRE, 34755 Atasehir / Istanbul (TR); ILERI, Süleyman, Kartal/Istanbul (TR); UZUN, Hüseyin, Sisli/Istanbul (TR); BUGAN, Salih Gürkan, Pendik / Istanbul (TR)
(74) Representative: Illing, Rolf

(56) References cited:
- CN-U- 204 527 107
- DE-A1-102010 054 498
- DE-B3-102013 010 884
- DE-U1- 20 021 647

## Description

The present invention relates in general to a mechanism for mounting a safety net (also known as "cargo net") between a passenger compartment and a luggage compartment (also known as "cargo compartment") of a vehicle, such as a station-wagon or a van, and more particularly to a tubular assembly having an adjustable length for mounting a safety net on the interior of such a vehicle.

Safety net arrangements to prevent that objects from the cargo compartment of a vehicle are thrown into the passenger compartment, for example in case of a frontal collision, are known in the art.

Standard ISO 27955:2010 is applicable to devices for the securing of cargo in passenger cars, station wagons and multi-purpose passenger cars, where the seats directly delimit the loading space. The standard defines minimum requirements and tests for front and rear seats and partitioning systems in order to improve the protection of the vehicle occupants against shifting load during a frontal impact.

From a practical point of view, the safety net can often be mounted in one of several places inside a particular vehicle, e.g. behind the rear seats or between the front seats and the rear seats, depending on the particular type of vehicle. However, for aerodynamics reasons or styling reasons the width of the vehicle is often not the same at these locations. Typically, side brackets are mounted inside the vehicle at these locations and a rod (or bar or tubular assembly) connectable to the safety net is removably mounted between one pair of side brackets. The rod often contains an axial spring for facilitating mounting and dismounting and for coping with tolerances and for avoiding rattling noise, but is not suitable for coping with the large differences in width between the mounting locations.

DE 10 2013 010 884 B3, which discloses the preamble of claim 1, describes a safety net for a passenger car for disconnecting passenger and luggage compartments. The net has a shaft axially displaced between an inner end position and an outer end position of a retaining hook in an insert. The shaft is provided with a holding element. The insert is provided with a spring element. Pressurized spring tension acts on the holding element in two opposite axial directions.

DE 10 2010 035 734 A1 describes a linkage system for a safety net supported in the region of a seatback of a rear seat row for protecting a passenger compartment of a passenger car. The system has two pipes inserted into each other. The pipes are arranged away from a holding element for inserting into a stationary receptacle of a passenger car. A pressure spring pressurizes the pipes toward opposite ends of the pipes. An elastic band or a wire inhibits nested arrangement of moving parts of the pipes.

US 2007/0210597 A1 describes a width adjustable car barrier including two posts and a central net connected between the two posts. Two side nets are slidably connected to two ends of the central net. The central net has a first top rail and a first bottom rail and each of the side nets has a second top rail and a second bottom rail.

EP 2 052 918 A2 describes a collapsible dividing device for a motor vehicle. The device has an upper retaining rod with two partial rods and a lower retaining rod with partial rods, where the rods are connected with a separating net. The partial rods are connected with one another through pivoting devices.

US 7,717,484 B2 describes a vehicle partition with a flexible partition constructed of standard netting and a rigid partition enclosure. A standard roll up spring within the enclosure allows the partition to roll up into the enclosure when not in use.

US 8,419,102 B2 describes a cargo net device with a pair of parallel pins abutting against the inner peripheral surface of a hollow shaft provided to a first arm part of a shank at a predetermined spacing in the longitudinal direction preventing the shank from tilting or rattling. Further, a coil spring restricts the rotation of the shank around the first arm part and keeps the position of the shank such that an interlocking part points upward.

DE 43 36 380 A1 describes a safety net system for a motor vehicle to separate a cargo compartment from a passenger compartment. It contains a cross element forming an attachment tube or rod extending across the back portion of a motor vehicle, capable of absorbing energy if an object impinges against a net suspended from the attachment rod or tube.

DE 197 28 587 C1 describes a safety net system with a load indicator in order to signal to the user that forces have acted on the safety net which possibly can lead to a prior damage.

The present invention has the object to provide a tubular assembly for mounting a safety net system inside a vehicle, the tubular assembly having an adjustable length, and to a safety net system comprising such a tubular assembly.

It is a particular object of the present invention to provide such a tubular assembly that is easier to produce and/or requires lower production costs and/or requires lower tooling costs, and preferably all of these objects.

These objects are achieved by a tubular assembly having the features of claim 1 and by a safety net system having the features of claim 6. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figures.

In an advantageous embodiment, the present invention discloses a tubular assembly with an adjustable length for mounting a safety net in a vehicle, the tubular assembly comprising: an inner metal bar having an outer end connectable to a side bracket of the vehicle; a first spring arranged around the inner metal bar and configured for pushing the inner metal bar in the direction of the outer end away from a mounting position of the spring; a tubular inner sleeve made of plastic, surrounding the first spring; a tubular outer sleeve made of metal surrounding the plastic inner sleeve; the inner metal bar having a transverse through-hole with a first cylindrical region having a first diameter for allowing passage of an elongated portion of a pin, and a second cylindrical region having a second diameter larger than the first diameter for accommodating a second spring, the pin having a bolt-like or mushroom-like shape comprising said elongated portion and further comprising a head portion, the head portion having a cross section larger than the first cylindrical region but smaller than the second cylindrical region for allowing movement of the pin in transverse direction relative to the inner bar; the second spring being arranged for pushing the pin outwardly such that the elongated portion extends partially from the inner metal bar; the tubular inner sleeve and the tubular outer sleeve having a plurality of at least two corresponding slots for receiving an outer end of said elongated portion of the pin for allowing a length of the tubular assembly to be selected from at least two predefined lengths.

It is an advantage that this assembly can be easily produced and assembled without needing special tools and thus is easy to produce.

It is a further advantage that the transverse through-hole can be easily produced, for example by drilling.

It is an advantage that the length of the assembly can conveniently be modified by simply pressing the end of the pin inwardly against the force of the second spring and by shifting the inner sleeve and outer sleeve towards or away from the outer end of the inner metal bar.

It is yet another advantage that the inner metal bar can be used for adjustment of the cargo net mechanism and to fasten a divider on an upper body side bracket of a vehicle.

It is an advantage that the inner plastic sleeve protects the spring from the outer metal sleeve and is used for housing the spring (as a spring cover).

It is an advantage that the outer metal sleeve protects all parts from outer impact.

It is yet a further advantage of the slots and the movable pin that it provides a simple and convenient mechanism for adjusting the length of the tubular assembly without requiring special tools.

According to a further advantageous embodiment of the present invention, the second spring is a helical spring.

According to another advantageous embodiment of the present invention, each of the inner metal bar and the tubular inner sleeve and the tubular outer sleeve have a circular cross section.

According to a further advantageous embodiment of the present invention, the tubular inner sleeve has three slots and the tubular outer sleeve has three corresponding slots for receiving said outer end of the elongated portion of the pin for allowing a length of the tubular assembly to be selected from three predefined lengths.

According to a further advantageous embodiment of the present invention, the transverse through-hole further comprises a third cylindrical region having a third diameter for accommodating a plug for holding the second spring.

In another advantageous embodiment, the present invention discloses a safety net system comprising: a tubular assembly with adjustable length according to any of the embodiments described above and a safety net connected to said tubular assembly.

Further features and advantages of the present invention will become apparent from the following description of a non-limiting embodiment of the invention which will be explained below with reference to the drawing.
- FIG. 1: shows a tubular assembly with an adjustable length according to an embodiment of the present invention, in exploded view.
- FIG. 2: shows a portion (indicated by a dotted rectangle) of the tubular assembly of FIG. 1, in enlarged exploded cut-out view.
- FIG. 3: shows the same portion of the tubular assembly of FIG. 1 in enlarged oblique exploded view.

The present invention is related to a tubular assembly 1 for mounting a safety net system in a vehicle, the tubular assembly 1 having an adjustable length.

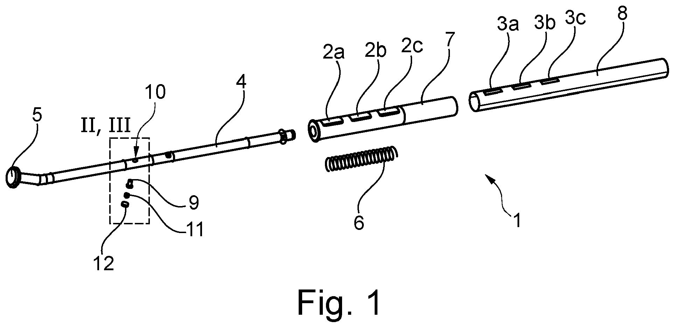

FIG. 1 shows a tubular assembly 1 for mounting a safety net in a vehicle, such as a station wagon or a van, in exploded view. The assembly 1 has an adjustable length such that it can be selectively mounted at one of several locations inside the vehicle, for example between a first pair of side brackets (not shown) located behind rear seats or between a second pair of side brackets located between the front seats and the rear seats, etc., despite the fact that the distance between the first pair of side brackets may be different from the distance between the second pair of side brackets, as is often the case.

Rather than providing a vehicle with several tubular assemblies, one for each possible mounting position, the present invention provides a single tubular assembly with an adjustable length, which can be mounted at any of said positions. This offers the following advantages:
- more practical for the end user (who only needs to buy and store and carry along a single tubular assembly instead of for example two or three),
- lower cost (both for the end user and for the car manufacturer),
- lower headliner mold and tooling cost (for the car manufacturer).

To this end, the length of the tubular assembly 1 can be selected as one out of two or three predefined lengths, depending on the number of slots 2a-2c, 3a-3c, as will become clearer from the following description.

The present invention proposes a new and inventive and practical design of the tubular assembly comprising:
- an inner metal bar 4 having an outer end 5 connectable to a side bracket (not shown) of the vehicle;
- a first helical spring 6 to be arranged around the inner metal bar 4 for pushing the inner metal bar in the direction of the outer end 5 and away from a mounting position of the first spring 6;
- a tubular inner sleeve 7 made of plastic and having dimensions for surrounding the first spring 6;
- a tubular outer sleeve 8 made of metal or metal alloy, for example made of aluminum or an aluminum alloy or steel, e.g. stainless steel, and having dimensions for surrounding the plastic inner sleeve 7.

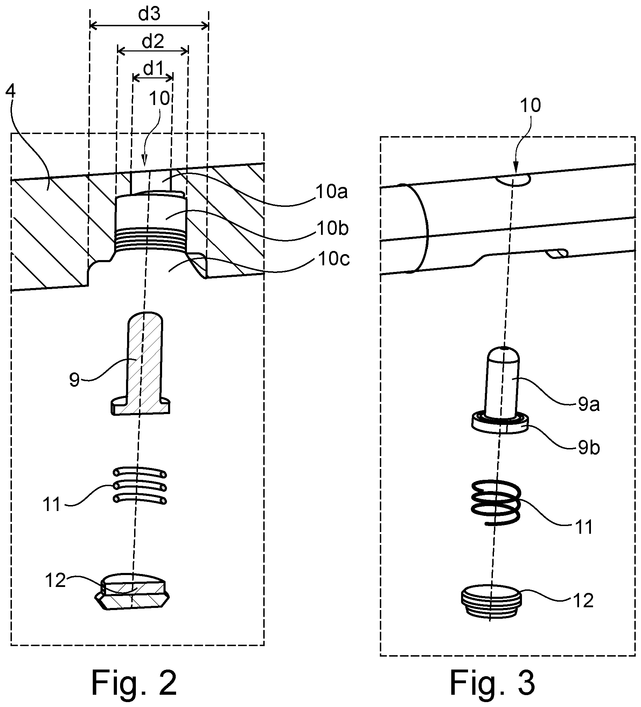

The inner metal bar 4 has a mechanism with a movable pin 9 (also referred to herein as a "stopper element") extending from a transverse through-hole 10 of the inner metal bar 4 (see FIG. 2 and FIG. 3). The pin 9 is pushed outwardly by a second spring 11, but can easily be pushed inwardly by the user when adjusting the length of the tubular assembly (as will become clearer further below).

As can be understood from FIG. 1, in the assembled state of the tubular assembly 1, the tubular inner sleeve 7 is shifted over the inner metal bar 4 and the tubular outer sleeve 8 is shifted over the tubular inner sleeve 7 in such a manner that the pin 10 is extending through the pair of corresponding slots 2a, 3a, or through the pair of corresponding slots 2b, 3b, or through the pair of corresponding slots 2c, 3c, depending on the chosen length. The selection of a specific one of the pairs of corresponding slots 2a, 3a and 2b, 3b and 2c, 3c, respectively, allows for a coarse adjustment of the length of the tubular assembly 1.

The plastic inner sleeve 7 protects the helical spring 6 mounted around the inner metal bar 4. The metal or metallic outer sleeve 8 protects the plastic inner sleeve 7 and further protects the spring 6.

Advantageously, each pair of the corresponding slots 2, 3 allows for a certain axial movement of the inner metal bar 4 relative to the inner sleeve 7 and outer sleeve 8 according to the extent of the slots 2, 3 in the axial direction of the corresponding inner sleeve 7 and outer sleeve 8, respectively, against the spring force of the first spring 6, while the pin 9 extends at least partially through the corresponding slots 2, 3. This facilitates easy fine adjustment of the length of the tubular assembly 1, thus it can more easily be fitted between a pair of side brackets in the vehicle for holding the assembly 1.

FIG. 2 shows the mechanism with the movable pin 9 (indicated by a dotted rectangle) in FIG. 1 in enlarged exploded cut-out view, and FIG. 3 shows the mechanism in enlarged exploded oblique view.

As can be seen, the pin 9 has a bolt-like or mushroom-like shape comprising an elongated portion 9a and a head portion 9b. The elongated portion 9a preferably has a rounded end, but that is not absolutely required.

The through-hole 10 has a first cylindrical region or space 10a having a first diameter d1 for allowing passage of the elongated portion 9a of the pin 9. The through-hole 10 has a second cylindrical region or space 10b having a second diameter d2 larger than the first diameter d1 for accommodating a second spring 11. The second spring 11 is configured for pushing the pin 9 outwardly (upwards in the representation of FIG. 2) so as to extend partially out of the inner bar 4, e.g. by exerting a spring force against the head portion 9b of the pin 9. In the example shown, the second spring 11 is also a helical spring, but that is not absolutely required, and another kind of spring can also be used, e.g. a leaf spring (not shown), the mounting of which would be slightly different, of course.

The head portion 9b of the pin 9 has a cross section larger than the first diameter d1 so that it cannot pass the first region 10a, but smaller than the second diameter d2 allowing limited movement of the pin 9 in transverse direction of the inner metal bar 4, while preventing the pin 9 from being pushed out of the through-hole 10.

In the example shown in FIG. 2 and FIG. 3, the through-hole 10 further comprises a third area or space 10c having a diameter d3 larger than the second diameter d2, but that is not essential for the present invention, and can also be implemented differently. If present, the third area 10c is adapted for holding a plug 12, for supporting the second spring 11. The inner wall of the third space 10c may have an internal threading (not shown) and the outer wall of the plug 12 may have a corresponding external threading, but threading is not absolutely required, and other means of fixing the plug 12 can also be used, for example by welding or glueing, etc. The plug 12 can be made of metal or plastic or a rubber or any other suitable material. Instead of the plug 12, also other means for holding the second spring 11 can be used, such as for example a dove tail engagement (not shown).

It is to be understood that, while FIG. 1 only shows one outer end 5 of the tubular assembly 1, the tubular assembly 1 may have another, second outer end (not shown) arranged on the tubular assembly 1 opposite the outer end 5 shown in FIG. 1. This second outer end may have the same shape or a similar shape as that of the outer end 5 so that the second outer end is receivable in or attachable to a corresponding one of a pair of side brackets of the vehicle for holding and detachably fixing the tubular assembly 1 therein in a similar fashion as described herein with respect to outer end 5. In this case, the mechanism to make the tubular assembly 1 length-adjustable as shown in FIG. 1 could also be provided in the same fashion in the region of said second outer end, thus providing a tubular assembly having a total of two such mechanisms shown in FIG. 1. However, it is to be understood, that the doubling of the mechanism of tubular assembly 1 shown in FIG. 1 is not absolutely required.

### REFERENCE NUMERALS

1: tubular assembly,
2: slot of tubular inner sleeve,
3: slot of tubular outer sleeve,
4: inner metal bar,
5: outer end,
6: first spring,
7: tubular inner sleeve,
8: tubular outer sleeve,
9: movable pin,
10: transverse through-hole,
11: second spring,
12: plug

## Claims

1. A tubular assembly (1) with an adjustable length for mounting a safety net in a vehicle, the tubular assembly (1) comprising:
- an inner metal bar (4) having an outer end (5) connectable to a side bracket of the vehicle;
- a first spring (6) arranged around the inner metal bar (4) and configured for pushing the inner metal bar (4) in the direction of the outer end (5) away from a mounting position of the spring (6);
- a tubular inner sleeve (7) made of plastic surrounding the first spring (6);
- a tubular outer sleeve (8) made of metal surrounding the plastic inner sleeve (7);
**characterized by** means of:
- the inner metal bar (4) having a transverse through-hole (10) with a first cylindrical region (10a) having a first diameter (d1) for allowing passage of an elongated portion (9a) of a pin (9), and a second cylindrical region (10b) having a second diameter (d2) larger than the first diameter for accommodating a second spring (11),
- the pin (9) having a bolt-like or mushroom-like shape comprising said elongated portion (9a) and further comprising a head portion (9b), the head portion having a cross section larger than the first region (10a) but smaller than the second region (10b) for allowing movement of the pin (9) in transverse direction relative to the inner bar (4);
- the second spring (11) being arranged for pushing the pin (9) outwardly such that the elongated portion (9a) extends partially from the inner metal bar (4); and
- the tubular inner sleeve (7) and the tubular outer sleeve (8) having a plurality of at least two corresponding slots (2a, 2b, 2c), (3a, 3b, 3c) for receiving an outer end of said elongated portion (9a) of the pin (9) for allowing a length of the tubular assembly (1) to be selected from at least two predefined lengths.

2. The tubular assembly (1) according to claim 1, wherein the second spring (11) is a helical spring.

3. The tubular assembly (1) according to claim 1 or 2, wherein each of the inner metal bar (4) and the tubular inner sleeve (7) and the tubular outer sleeve (8) have a circular cross section.

4. The tubular assembly (1) according to any of the previous claims, wherein the tubular inner sleeve (7) has three slots (2a, 2b, 2c) and the tubular outer sleeve (8) has three corresponding slots (3a, 3b, 3c) for receiving said outer end of the elongated portion (9a) of the pin (9) for allowing a length of the tubular assembly (1) to be selected from three predefined lengths.

5. The tubular assembly (1) according to any of the previous claims, wherein the transverse through-hole (10) further comprises a third cylindrical region (10c) having a third diameter (d3) for accommodating a plug (12) for holding the second spring (11).

6. A safety net system comprising:
- a tubular assembly (1) with adjustable length according to any of the previous claims, and
- a safety net connected to said tubular assembly (1).

## Patentansprüche

1. Röhrenförmige Anordnung (1) mit einer verstellbaren Länge zum Montieren eines Sicherheitsnetzes in einem Fahrzeug, wobei die röhrenförmige Anordnung (1) Folgendes umfasst:
- einen inneren Metallstab (4) mit einem äußeren Ende (5), das mit einem seitlichen Halter des Fahrzeugs verbindbar ist;
- eine erste Feder (6), die um den inneren Metallstab (4) angeordnet und zum Schieben des inneren Metallstabes (4) in der Richtung des äußeren Endes (5) weg von einer Montageposition der Feder (6) angeordnet ist;
- eine röhrenförmige innere Hülse (7), hergestellt aus Kunststoff, die die erste Feder (6) umgibt;
- eine röhrenförmige äußere Hülse (8), hergestellt aus Metall, die die innere Kunststoffhülse (7) umgibt;
**dadurch gekennzeichnet, dass**:
- der innere Metallstab (4) ein quer verlaufendes Durchgangsloch (10) mit einer ersten zylindrischen Region (10a) mit einem ersten Durchmesser (d1) aufweist, um eine Passage eines länglichen Abschnitts (9a) eines Stiftes (9) zu gestatten, und einer zweiten zylindrischen Region (10b), die einen zweiten Durchmesser (d2) aufweist, der größer als der erste Durchmesser ist, um eine zweite Feder (11) aufzunehmen,
- der Stift (9) eine bolzenähnliche oder pilzähnliche Form aufweist, umfassend den länglichen Abschnitt (9a) und ferner umfassend einen Kopfabschnitt (9b), wobei der Kopfabschnitt einen Querschnitt aufweist, der größer als die erste Region (10a), aber kleiner als die zweite Region (10b) ist, um relativ zu dem inneren Stab (4) eine Bewegung des Stiftes (9) in Querrichtung zu gestatten;
- die zweite Feder (11) angeordnet ist, um den Stift (9) nach außen zu schieben, sodass sich der längliche Abschnitt (9a) partiell von dem inneren Metallstab (4) erstreckt; und
- die röhrenförmige innere Hülse (7) und die röhrenförmige äußere Hülse (8) eine Vielzahl von mindestens zwei korrespondierenden Schlitzen (2a, 2b, 2c), (3a, 3b, 3c) aufweisen, um ein äußeres Ende des länglichen Abschnitts (9a) des Stiftes (9) aufzunehmen, um einer Länge der röhrenförmigen Anordnung (1) zu gestatten, aus mindestens zwei vordefinierten Längen ausgewählt zu werden.

2. Röhrenförmige Anordnung (1) nach Anspruch 1, wobei die zweite Feder (11) eine Schraubenfeder ist.

3. Röhrenförmige Anordnung (1) nach Anspruch 1 oder 2, wobei der innere Metallstab (4) und die röhrenförmige innere Hülse (7) und die röhrenförmige äußere Hülse (8) jeweils einen kreisförmigen Querschnitt aufweisen.

4. Röhrenförmige Anordnung (1) nach einem der vorangehenden Ansprüche, wobei die röhrenförmige innere Hülse (7) drei Schlitze (2a, 2b, 2c) aufweist und die röhrenförmige äußere Hülse (8) drei korrespondierende Schlitze (3a, 3b, 3c) aufweist, um das äußere Ende des länglichen Abschnitts (9a) des Stiftes (9) aufzunehmen, um einer Länge der röhrenförmigen Anordnung (1) zu gestatten, aus drei vordefinierten Längen ausgewählt zu werden.

5. Röhrenförmige Anordnung (1) nach einem der vorangehenden Ansprüche, wobei das quer verlaufende Durchgangsloch (10) ferner eine dritte zylindrische Region (10c) mit einem dritten Durchmesser (d3) zum Aufnehmen eines Einsatzes (12) zum Halten der zweiten Feder (11) umfasst.

6. Sicherheitsnetzsystem, umfassend:
- eine röhrenförmige Anordnung (1) mit verstellbarer Länge nach einem der vorangehenden Ansprüche, und
- ein mit der röhrenförmigen Anordnung (1) verbundenes Sicherheitsnetz.

## Revendications

1. Ensemble tubulaire (1) de longueur réglable destiné à monter un filet de sécurité dans un véhicule, l'ensemble tubulaire (1) comprenant :
une barre métallique interne (4) comportant une extrémité extérieure (5) pouvant être raccordée à un support latéral du véhicule ;
un premier ressort (6) disposé autour de la barre métallique interne (4) et conçu pour pousser la barre métallique interne (4) en direction de l'extrémité extérieure (5) à distance d'une position de montage du ressort (6) ;
un manchon tubulaire interne (7) constitué de plastique entourant le premier ressort (7) ;
un manchon tubulaire externe (8) constitué de métal entourant le manchon tubulaire interne (7) ;
**caractérisé en ce que** :
la barre métallique interne (4) comporte un trou traversant transversal (10) comportant une première région cylindrique (10a) présentant un premier diamètre (d1) destiné à permettre le passage d'une partie allongée (9a) d'une broche (9), et une deuxième région cylindrique (10b) présentant un deuxième diamètre (d2) supérieur au premier diamètre destiné à loger un second ressort (11),
la broche (9) présente une forme de boulon ou de champignon comprenant ladite partie allongée (9a) et comprenant en outre une partie de tête (9b), la partie de tête ayant une section transversale supérieure à la première région (10a) mais inférieure à la deuxième région (10b) pour permettre le déplacement de la broche (9) dans la direction transversale par rapport à la barre interne (4) ;
le second ressort (11) est agencé pour pousser la broche (9) vers l'extérieur de sorte que la partie allongée (9a) s'étende partiellement depuis la barre métallique interne (4) ; et
le manchon tubulaire interne (7) et le manchon tubulaire externe (8) comportent une pluralité d'au moins deux fentes correspondantes (2a, 2b, 2c) (3a, 3b, 3c) destinées à recevoir une extrémité extérieure de ladite partie allongée (9a) de la broche (9) pour permettre de sélectionner une longueur de l'ensemble tubulaire (1) parmi au moins deux longueurs prédéfinies.

2. Ensemble tubulaire (1) selon la revendication 1, dans lequel le second ressort (11) est un ressort hélicoïdal.

3. Ensemble tubulaire (1) selon la revendication 1 ou 2, dans lequel la barre métallique interne (4), le manchon tubulaire interne (7) et le manchon tubulaire externe (8) présentent tous une section transversale circulaire.

4. Ensemble tubulaire (1) selon l'une quelconque des revendications précédentes, dans lequel le manchon tubulaire interne (7) comprend trois fentes (2a, 2b, 2c) et le manchon tubulaire externe (8) comprend trois fentes correspondantes (3a, 3b, 3c) destinées à recevoir ladite extrémité extérieure de la partie allongée (9a) de la broche (9) pour permettre de sélectionner une longueur de l'ensemble tubulaire (1) parmi trois longueurs prédéfinies.

5. Ensemble tubulaire (1) selon l'une quelconque des revendications précédentes, dans lequel le trou traversant transversal (10) comprend en outre une troisième région cylindrique (10c) présentant un troisième diamètre (d3) pour loger un bouchon (12) destiné à retenir le second ressort (11).

6. Système de filet de sécurité comprenant :
un ensemble tubulaire (1) de longueur réglable selon l'une quelconque des revendications précédentes, et
un filet de sécurité raccordé audit ensemble tubulaire (1).
